# EUROPÄISCHE PATENTSCHRIFT

(11) **EP 3 221 088 B1**
(45) Veröffentlichungstag und Bekanntmachung des Hinweises auf die Patenterteilung: **01.01.2020**
(21) Anmeldenummer: 15797981.6
(22) Anmeldetag: 17.11.2015
(51) Int. Cl.: B25D 16/00

(54) **STEUERUNGSVERFAHREN FÜR EINEN BOHRHAMMER**
CONTROL METHOD FOR A HAMMER DRILL
PROCÉDÉ DE COMMANDE D'UNE PERCEUSE

(30) Priorität: 20.11.2014 EP 14194081
(43) Veröffentlichungstag der Anmeldung: 27.09.2017
(73) Patentinhaber: Hilti Aktiengesellschaft, 9494 Schaan (LI)
(72) Erfinder: SCHAER, Roland, 9472 Grabs (CH); DRAGANIS, Antonios, 86825 Bad Wörishofen (DE); HRICKO, Peter, 9470 Buchs (CH); MÖSSNANG, Franz, 86391 Stadtbergen (DE); MANSCHITZ, Erwin, 82110 Germering (DE)
(74) Vertreter: Hilti Aktiengesellschaft Corporate Intellectual Property
(86) Internationale Anmeldenummer: PCT/EP2015/076799
(87) Internationale Veröffentlichungsnummer: WO 2016/079108

(56) Entgegenhaltungen:
- EP-A1- 1 452 278
- EP-A1- 2 447 010
- EP-A1- 2 497 608
- WO-A2-88/06508
- DE-A1-102012 208 870

## Beschreibung

### GEBIET DER ERFINDUNG

Die vorliegende Erfindung betrifft ein Steuerungsverfahren für einen Bohrhammer. Ein entsprechendes Steuerungsverfahren gemäß dem Oberbegriff von Anspruch 1 ist aus der EP 2 497 608 A1 bekannt.

Ein Bohrhammer, wie aus US3507337A bekannt, wird zum Bohren von Löchern in armiertem Beton verwendet. Der Bohrhammer dreht einen Bohrer um seine Achse und schlägt periodisch auf das Bohrerende. Der Bohrer kann sich beim Drehen an einem Armierungsstab verklemmen. Die Klemmwirkung kann so groß sein werden, dass der Bohrer nicht mehr aus dem Bohrloch entfernt werden kann.

### OFFENBARUNG DER ERFINDUNG

Das Steuerungsverfahren für einen Bohrhammer sieht folgende Schritte vor. Im Grundbetrieb dreht der Motor mit einer Betriebs-Drehzahl für den bohrmeißelnden Betrieb zum drehenden Antreiben der Werkzeugaufnahme und zum Antreiben des Schlagwerks mit einer nominellen Schlagleistung. Die Drehmomentkupplung wird mit einem Sensor überwacht. Tritt ein Auslösen der Drehmomentkupplung auf, wird während eines Auslösens der Drehmomentkupplung die Schlagleistung des Schlagwerks auf unter 10 % der nominellen Schlagleistung abgesenkt und die Drehmomentkupplung drehend angetrieben wird. Obwohl das Drehen blockiert ist, erweist es sich als vorteilhaft, dass weiterhin ein Drehmoment auf den Bohrer ausgeübt wird. Das Schlagwerk muss dazu allerdings abgeschaltet werden. Andernfalls verstärkt sich die Klemmwirkung. Der Bohrhammer kehrt in seinen Betriebsmodus zurück, wenn der Bohrer sich löst. Wenn das Auslösen der Drehmomentkupplung endet, wird die Schlagleistung des Schlagwerks auf die nominelle Schlagleistung erhöht und die Drehmomentkupplung wird mit der Betriebs-Drehzahl für den bohrmeißelnden Betrieb angetrieben.

Eine Ausgestaltung sieht für einen drehenden Betrieb ohne Meißelwirkung folgende Schritte vor. Der Motor läuft mit einer Betriebs-Drehzahl für den drehenden Betrieb zum drehenden Antreiben der Werkzeugaufnahme. Die Drehmomentkupplung wird mit dem Sensor überwacht. Beim Auslösen der Drehmomentkupplung wird entweder die Drehzahl des Motors soweit abgesenkt wird, dass die Drehmomentkupplung nicht weiter auslöst, oder die Drehzahl bleibt unverändert die Betriebs-Drehzahl.

### KURZE BESCHREIBUNG DER FIGUREN

Die nachfolgende Beschreibung erläutert die Erfindung anhand von exemplarischen Ausführungsformen und Figuren. In den Figuren zeigen:

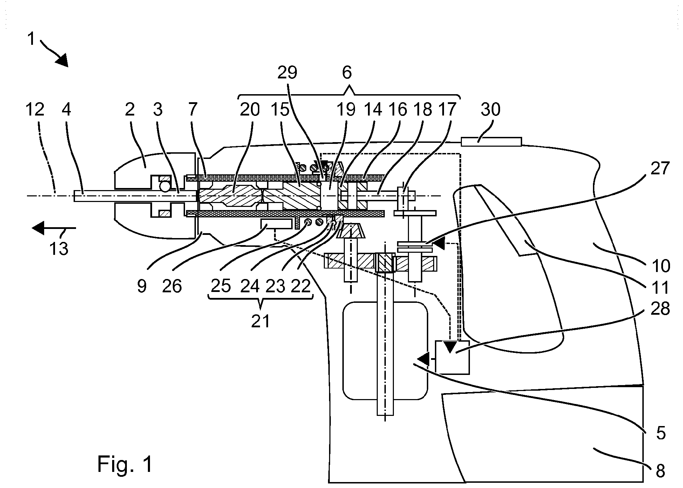

Fig. 1 einen Bohrhammer

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

Fig. 1 zeigt als Beispiel einer meißelnden Handwerkzeugmaschine schematisch einen Bohrhammer **1.** Der Bohrhammer **1** hat eine Werkzeugaufnahme **2,** in welche ein Schaftende **3** eines Werkzeug, z.B. eines des Bohrers **4,** eingesetzt werden kann. Einen primären Antrieb des Bohrhammers **1** bildet ein Motor **5,** welcher ein Schlagwerk **6** und eine Abtriebswelle **7** antreibt. Ein Batteriepaket **8** oder eine Netzleitung versorgt den Motor **5** mit Strom. Das Schlagwerk **6,** der Motor **5** und weitere Antriebskomponenten sind in einem Maschinengehäuse **9** angeordnet. Ein Anwender kann den Bohrhammer **1** mittels eines an dem Maschinengehäuse **9** befestigten Handgriffs **10** führen und mittels eines Systemschalters **11** den Bohrhammer **1** in Betrieb nehmen. Im Betrieb dreht der Bohrhammer **1** den Bohrer **4** kontinuierlich um eine Arbeitsachse **12** und kann dabei den Bohrer **4** in Schlagrichtung **13** längs der Arbeitsachse **12** in einen Untergrund schlagen.

Das Schlagwerk **6** ist ein pneumatisches Schlagwerk **6.** Ein Erregerkolben **14** und ein Schläger **15** sind in einem Führungsrohr **16** in dem Schlagwerk **6** längs der Arbeitsachse **12** beweglich geführt. Der Erregerkolben **14** ist über einen Exzenter **17** an den Motor **5** angekoppelt und zu einer periodischen, linearen Bewegung gezwungen. Ein Pleuel **18** verbindet den Exzenter **17** mit dem Erregerkolben **14.** Eine Luftfeder gebildet durch eine pneumatische Kammer **19** zwischen dem Erregerkolben **14** und dem Schläger **15** koppelt eine Bewegung des Schlägers **15** an die Bewegung des Erregerkolbens **14** an. Der Schläger **15** kann direkt auf ein hinteres Ende des Bohrers **4** aufschlagen oder mittelbar über einen im Wesentlichen ruhenden Döpper **20** einen Teil seines Impulses auf den Bohrer **4** übertragen.

Eine Drehmomentkupplung **21** ist in dem Antriebsstrang zwischen dem Motor **5** und der Werkzeugaufnahme **2** angeordnet. Die Drehmomentkupplung **21** löst aus, wenn ein anliegendes Drehmoment eine Auslöseschwelle überschreitet. Die Werkzeugaufnahme **2** wird durch die Drehmomentkupplung **21** von dem Motor **5** entkoppelt. Die Drehmomentkupplung **21** koppelt nach kurzer Zeit wieder ein. Überschreitet das Drehmoment weiterhin die Auslöseschwelle, löst die Drehmomentkupplung **21** erneut aus. Das Auslösen und Einkoppeln wiederholt sich bis entweder der Bohrer **4** freigerüttelt wird oder der Anwender den Bohrhammer **1** abschaltet.

Die beispielhafte Drehmomentkupplung **21** hat eine von dem Motor **5** angetriebene Scheibe **22,** die über mehrere Sperrkörper **23** in Taschen einer abtriebsseitigen Scheibe **24** eingreift. Eine Schraubenfeder **25** hält die beiden Scheiben **22, 24** im Eingriff. Überschreitet das anliegende Drehmoment die Auslöseschwelle, verschiebt sich eine der Scheiben gegen die Kraft der Schraubenfeder **25,** bis die Sperrkörper **23** außer Eingriff sind. Die Drehmomentkupplung **21** löst aus. Die Drehmomentübertragung ist für die Zeitspanne, die die Sperrkörper **23** außer Eingriff sind, sehr gering. Die Drehmomentübertragung setzt wieder ein, wenn die Sperrkörper **23** in der nächsten oder übernächsten Tasche wieder in Eingriff gelangen. Überschreitet das Drehmoment weiterhin die Auslöseschwelle treten die Sperrkörper **23** erneut aus dem Eingriff. Es ergibt sich eine gepulste Drehmomentübertragung, deren mittleres Drehmoment deutlich geringer als bei der geschlossenen Drehmomentkupplung **21** mit dauerhaften Eingriff der Sperrkörper **23.**

Der Bohrhammer **1** deaktiviert das Schlagwerk **6,** wenn die Drehmomentkupplung **21** auslöst. Der Schläger **15** des Schlagwerks **6** kommt vorzugsweise vollständig zum Stehen. Die Geschwindigkeit des Schlägers **15** ist wenigstens soweit reduziert, dass die Schlagleistung auf unter ein Zehntel des normalen Betriebswerts abfällt. Der Bohrer **4** hat keine oder quasi keine meißelnde Abbauleistung mehr. Die Drehmomentkupplung **21** wird weiterhin drehend angetrieben, um ein Drehmoment auf die Werkzeugaufnahme **2** zu übertragen. Die auslösende Drehmomentkupplung **21** überträgt ein gepulstes Drehmoment auf die Werkzeugaufnahme **2.** Der Bohrhammer **1** wechselt somit von einem bohrmeißelnden Betrieb in einen gepulst-bohrenden Betrieb ohne Meißelwirkung. Das Schlagwerk **6** wird wieder aktiviert, d.h. die Schlagleistung auf den Betriebswert erhöht, wenn die Drehmomentkupplung **21** schließt. Der Bohrhammer **1** wechselt wieder in den ggf. vom Benutzer gewählten bohrmeißelnden Betriebsmodus. Der Drehantrieb für die Drehmomentkupplung **21** wird deaktiviert, wenn der Anwender den Bohrhammer 1 über den Systemschalter **11** ausschaltet.

Das Auslösen der Drehmomentkupplung **21** kann ein Sensor **26** erfassen. Vorzugsweise misst der Sensor **26** Drehbewegungen um die Arbeitsachse **12,** oder sonstige Vibrationen oder Beschleunigungen, die durch das wiederholten Lösen und Eingreifen der Drehmomentkupplung **21** erzeugt werden. Die Zeitspanne zwischen dem Lösen und dem Eingreifen ist im Wesentlichen durch die Drehzahl der angetriebenen Scheibe **22** und die Anzahl der Sperrkörper **23** vorgegeben. Ein Bandpassfilter des Sensors **26** hat einen Durchlass-Frequenzbereich entsprechend der Zeitspanne. Der Sensor **26** filtert die Messsignale mit dem Bandpassfilter und übersteigt das gefilterte Messsignal einen Schellwert, meldet der Sensor **26** ein Auslösen der Drehmomentkupplung **21.** Der Sensor **26** kann eine Stellung oder Bewegung der beweglichen Scheibe **24** erfassen. Eine Auslenkung aus der Eingriffsstellung wird als Auslösen der Drehmomentkupplung **21** gemeldet. Des Weiteren kann die Drehzahl an der antriebsseitigen und der abtriebsseitigen Scheibe **24** mit einem Drehzahlsensor erfasst und verglichen werden. Eine Abweichung wird als Auslösen der Drehmomentkupplung **21** gemeldet.

Das Abschalten des Schlagwerks **6** kann in verschiedener Weise erfolgen. Beispielsweise kann eine schaltbare Kupplung **27** vor dem Exzenter **17** angeordnet sein. Eine Steuerung **28** öffnet die schaltbare Kupplung **27,** wenn der Sensor **26** ein Auslösen der Drehmomentkupplung **21** meldet. Der Erregerkolben **14** bleibt stehen. In Folge bleibt auch der Schläger **15** stehen. Die Steuerung **28** schließt die schaltbare Kupplung **27,** wenn der Sensor **26** kein Auslösen der Drehmomentkupplung **21** meldet. Der Erregerkolben **14** bewegt sich wieder und regt den Schläger **15** zur Bewegung an.

Eine Ausführung sieht eine Belüftungsklappe **29** im Bereich der pneumatischen Kammer **19** vor. Die Steuerung **28** öffnet die Belüftungsklappe **29,** wenn der Sensor **26** ein Auslösen der Drehmomentkupplung **21** meldet. Die pneumatische Kammer **19** ist belüftet. Die von dem Erregerkolben **14** bewegte Luft kann an der Belüftungsklappe **29** entweichen bzw. einströmen, wodurch trotz bewegtem Erregerkolben **14** kein Druck in der pneumatischen Kammer **19** aufgebaut wird. Der Schläger **15** ist nicht oder nur schwach an den Erregerkolben **14** angekoppelt und bleibt entsprechend stehen oder ist sehr langsam. Die Steuerung **28** schließt die Belüftungsklappe **29,** wenn der Sensor **26** eine geschlossene Drehmomentkupplung **21** meldet. Die pneumatische Kammer **19** ist abgeschlossen, der Erregerkolben **14** kann einen Druck aufbauen und entsprechend ist der Schläger **15** wieder angekoppelt und bewegt.

Eine Ausführung sieht vor, die Drehzahl des Motors **5** auf einen Abschaltwert für das Schlagwerk **6** zu reduzieren. Bei dem Abschaltwert bricht die Kopplung des Schlägers **15** an den Erregerkolben **14** soweit ein, dass der Schläger **15** vollständig stehenbleibt oder quasi stehenbleibt. Der Abschaltwert ist nicht Null. Sondern der Motor **5** übt mit der Drehzahl gleich dem Abschaltwert noch ein wesentliches Drehmoment auf die Drehmomentkupplung **21** bzw. die Werkzeugaufnahme **2** aus.

Die Drehzahl des Motors **5** ist im Betrieb auf eine optimale Anregung des Schlägers **15** ausgelegt. Die Periodizität des Erregerkolbens **14** und Schlagzahl des Schlagwerks **6** kann nur in einem engen Fenster geändert werden. Der Grund hierfür ist unter Anderem die geringe Kopplungsstärke der Luftfeder. Die Schlagzahl ist auf eine resonante Anregung des durch die Luftfeder und Schläger **15** gebildeten Masse-Feder-System abgestimmt. Die Steuerung **28** reduziert die Drehzahl von dem Betriebswert für die Schlagzahl auf den Abschaltwert. Der Abschaltwert kann empirisch ermittelt werden. Bei dem Abschaltwert ist die Ankopplung des Schlägers **15** an den Erregerkolben **14** so schwach, dass der Schläger **15** vollständig zum Stehen kommt oder eine Schlagleistung vernachlässigbar gering wird, z.B. geringer als ein Zehntel der normalen Schlagleistung. Die Werkzeugaufnahme **2** soll weiterhin gedreht werden. Der Abschaltwert ist deswegen größer Null. Der Abschaltwert ist so groß als möglich gewählt, denn die Drehmomentkupplung **21** übt mit sinkender Drehzahl ein zunehmendes rückwirkendes Moment auf den Anwender aus. Der Abschaltwert ist vorzugsweise größer als 80 % der minimalen Drehzahl, ab der der Schläger **15** an den Erregerkolben **14** ankoppelt. Die untere Grenze für den Abschaltwert ist somit knapp um die Schwelle, an der das Schlagwerk **6** noch aktiv ist. Der Abschaltwert ist vorzugsweise geringer als eine Drehzahl, bei welcher die Schlagleistung bei 10 % der nominellen Schlagleistung des Bohrhammers **1** liegt.

Ein beispielhaftes Steuerungsverfahren wird nachfolgend erläutert. Das Steuerungsverfahren wird von einer Steuerung **28,** z.B. einen Mikroprozessor, des Bohrhammers **1** ausgeführt.

Der Anwender betätigt den Systemschalter **11.** Die Steuerung **28** beschleunigt ansprechend auf das Betätigen des Systemschalters **11** den Motor **5** auf die Betriebs-Drehzahl. Das Schlagwerk **6** ist aktiv und der Schläger **15** schlägt periodisch mit der Schlagzahl auf den Bohrer **4.** Die Steuerung **28** tastet den Sensor **26** ab. Wenn der Bohrer **4** blockiert oder sich schwergängig dreht, wird die Drehmomentschwelle der Drehmomentkupplung **21** überschritten. Die Drehmomentkupplung **21** löst aus. Der Sensor **26** meldet das Auslösen an die Steuerung **28.** Die Steuerung **28** schaltet das Schlagwerk **6** aus. Beispielsweise wird die Drehzahl des Motors **5** auf den Abschaltwert abgesenkt. Der Motor **5** kann dazu gebremst werden, z.B. durch Kurzschließen. Es besteht jedoch keine Notwendigkeit eines schnellen Abschaltens des Schlagwerks. Vorzugsweise läuft der Motor **5** aus, um die Drehzahl vergleichsweise langsam abzusenken. Ein einmaliges Auslösen der Drehmomentkupplung **21** führt somit nicht zu einem zwischenzeitlichen Abschalten des Schlagwerks **6.** Das Schlagwerk **6** bleibt solange deaktiviert, wie der Sensor **26** ein Auslösen der Drehmomentkupplung **21** meldet. Der Drehantrieb dreht währenddessen weiter und treibt die Drehmomentkupplung **21** mit dem Abschaltwert an. Sobald der Sensor **26** meldet, dass die Drehmomentkupplung **21** geschlossen ist, wird der Motor **5** auf die Betriebs-Drehzahl beschleunigt. Das Schlagwerk **6** wird hierdurch aktiviert.

Unabhängig, ob die Drehmomentkupplung **21** auslöst oder geschlossen ist, wird der Motor **5** abgeschaltet, wenn der Anwender den Systemschalter **11** loslässt und damit den Bohrhammer **1** abschaltet.

Der Bohrhammer **1** kann einen Wahlschalter **30** aufweisen, der eine Wahl zwischen wenigstens einem bohrmeißelnden Betriebsmodus und einem rein bohrenden Betriebsmodus ermöglicht. Die Steuerung **28** agiert entsprechend dem oben beschriebenen Verfahren im bohrmeißelnden Betriebsmodus. In dem rein bohrenden Betriebsmodus dreht der Motor **5** ebenfalls mit einer Betriebs-Drehzahl, welche vorzugsweise durch den Motor **5** leistungsbegrenzt ist. Die Betriebs-Drehzahl kann sich von der Betriebs-Drehzahl für den bohrmeißelnden Betriebsmodus unterscheiden, da die resonante Anregung des Schlägers **15** nicht erforderlich ist. Die Steuerung **28** überwacht die Drehmomentkupplung **21** respektive den Sensor **26.** Beim Auslösen der Drehmomentkupplung **21** wird vorzugsweise die Drehzahl soweit abgesenkt, bis die Drehmomentkupplung **21** nicht mehr auslöst. Der Motor **5** kann auch vollständig abgeschaltet werden, d.h. die Drehzahl auf Null abgesenkt werden. Alternativ kann die Betriebs-Drehzahl beibehalten werden. Der Anwender entscheidet, ob auf das Auslösen der Drehmomentkupplung **21** reagiert werden soll.

## Patentansprüche

1. Steuerungsverfahren für einen Bohrhammer (1), der eine Werkzeugaufnahme (2), einen Motor (5), eine zwischen dem Motor (5) und der Werkzeugaufnahme (2) angeordnete Drehmomentkupplung (21) und ein von dem Motor (5) angetriebenes, pneumatisches Schlagwerk (6) aufweist, das in einem bohrmeißelndem Betrieb folgende Schritte ausführt:
Betreiben des Motors mit einer Betriebs-Drehzahl für den bohrmeißelnden Betrieb zum drehenden Antreiben der Werkzeugaufnahme (2) und zum Antreiben des Schlagwerks (6) mit einer nominellen Schlagleistung;
Überwachen der Drehmomentkupplung (21) mit einem Sensor (26);
**dadurch kennzeichnet, dass**
während eines Auslösens der Drehmomentkupplung (21) die Schlagleistung des Schlagwerks (6) auf unter 10 % der nominellen Schlagleistung abgesenkt wird und die Drehmomentkupplung (21) drehend angetrieben wird; und
wobei wenn das Auslösen der Drehmomentkupplung (21) endet, die Schlagleistung des Schlagwerks (6) auf die nominelle Schlagleistung erhöht wird und die Drehmomentkupplung (21) mit der Betriebs-Drehzahl für den bohrmeißelnden Betrieb angetrieben wird.

2. Steuerungsverfahren nach Anspruch 1, das in einem drehenden Betrieb ohne Meißelwirkung folgende Schritte ausführt:
Betreiben des Motors (5) mit einer Betriebs-Drehzahl für den drehenden Betrieb zum drehenden Antreiben der Werkzeugaufnahme (2);
Überwachen der Drehmomentkupplung (21) mit dem Sensor (26);
wobei bei Auslösen der Drehmomentkupplung (21) entweder die Drehzahl des Motors (5) soweit abgesenkt wird, dass die Drehmomentkupplung (21) nicht auslöst oder die Drehzahl unverändert die Betriebs-Drehzahl ist.

3. Steuerungsverfahren nach einem der vorhergehenden Ansprüche, **dadurch gekennzeichnet, dass** während des Auslösens der Drehmomentkupplung (21) die Drehzahl des Motors (5) wenigstens 80 % der Drehzahl des Motors (5) beträgt, bei welcher das pneumatische Schlagwerk (6) abschaltet.

## Claims

1. Control method for a drill hammer (1), which has a tool holder (2), a motor (5), a torque coupling (21) arranged between the motor (5) and the tool holder (2) and a pneumatic striking mechanism (6) driven by the motor (5), which carries out the following steps in drilling operation:
operating the motor with an operating speed for drilling operation to drive the tool holder (2) rotating and to drive the striking mechanism (6) with a nominal striking power;
monitoring the torque coupling (21) with a sensor (26);
**characterised in that**
during triggering of the torque coupling (21) the striking power of the striking mechanism (6) is reduced to below 10% of the nominal striking power and the torque coupling (21) is driven rotating; and
in which if triggering of the torque coupling (21) ends, the striking power of the striking mechanism (6) is increased to the nominal striking power and the torque coupling (21) is driven with the operating speed for drilling operation.

2. Control method according to claim 1, which carries out the following steps in rotating operation without chiselling effect:
operating the motor (5) with an operating speed for rotating operation to drive the tool holder (2) rotating;
monitoring the torque coupling (21) with the sensor (26);
in which on triggering of the torque coupling (21) either the speed of the motor (5) is lowered so far that the torque coupling (21) is not triggered or the speed is unchanged as the operating speed.

3. Control method according to one of the previous claims, **characterised in that** during triggering of the torque coupling (21) the speed of the motor (5) is at least 80% of the speed of the motor (5), in which the pneumatic striking mechanism (6) switches off.

## Revendications

1. Procédé de commande pour un marteau perforateur (1) comportant un porte-outil (2), un moteur (5), un accouplement à couple (21) agencé entre le moteur (5) et le porte-outil (2) et un mécanisme de percussion pneumatique (6) entraîné par le moteur (5), le procédé de commande comportant, dans un mode de perçage avec burinage, les étapes suivantes consistant à :
faire fonctionner le moteur à une vitesse de fonctionnement pour le mode de perçage avec burinage pour entraîner le porte-outil (2) en rotation et pour entraîner le mécanisme de percussion(6) avec une puissance de percussion nominale,
surveiller l'accouplement à couple (21) avec un capteur (26),
**caractérisé en ce que**
pendant un désengagement de l'accouplement à couple (21), la puissance de percussion du mécanisme de percussion (6) est réduite jusqu'à moins de 10 % de la puissance de percussion nominale et l'accouplement à couple (21) est entraîné en rotation, et
dans lequel, lorsque le désengagement de l'accouplement à couple (21) prend fin, la puissance de percussion du mécanisme de percussion (6) est augmentée jusqu'à la puissance de percussion nominale et l'accouplement à couple (21) est entraîné à la vitesse de fonctionnement pour le mode de perçage avec burinage.

2. Procédé de commande selon la revendication 1, comportant, dans un mode de rotation sans burinage, les étapes suivantes consistant à :
faire fonctionner le moteur (5) à une vitesse de fonctionnement pour le fonctionnement en rotation pour entraîner le porte-outil (2) en rotation,
surveiller l'accouplement à couple (21) avec le capteur (26),
dans lequel, lors du désengagement de l'accouplement à couple (21), soit la vitesse de rotation du moteur (5) est réduite de telle sorte que l'accouplement à couple (21) n'est pas désengagé, soit la vitesse de rotation n'est pas modifiée pour la vitesse de fonctionnement.

3. Procédé de commande selon l'une des revendications précédentes, **caractérisé en ce que** pendant le désengagement de l'accouplement à couple (21), la vitesse de rotation du moteur (5) est au moins égale à 80 % de la vitesse de rotation du moteur (5) à laquelle le mécanisme de percussion pneumatique (6) s'arrête.
